# EUROPEAN PATENT APPLICATION

(11) **EP 4 155 644 A1**
(43) Date of publication of application: **29.03.2023**
(21) Application number: 21809319.3
(22) Date of filing: 18.05.2021
(51) Int. Cl.: F28C 3/04, F28C 3/06

(54) **FLUID CONTAINER AND HEAT EXCHANGE DEVICE**

(30) Priority: 18.05.2020 JP 2020086797
(71) Applicant: Xenesys Inc., Tokyo 136-0071 (JP); National University Corporation Tokyo University of Marine Science And Technology, Minato-ku Tokyo 108-8477 (JP)
(72) Inventor: SAKURAZAWA, Shunji, Imari-shi, Saga 848-0121 (JP); MORITA, Motoaki, Tokyo 135-8533 (JP)
(74) Representative: HGF
(86) International application number: PCT/JP2021/018871
(87) International publication number: WO 2021/235456

(57) **Abstract**

A fluid container that can prevent a container from being in contact with a heat source fluid and stably hold the heat source fluid, even if corrosive, in the container to perform heat recovery and the like. A first fluid and a second fluid are both allowed to flow into and out of a container body 10. The second fluid is supplied into the container body by a second fluid supply unit 30 to form a layer of the second fluid flowing down along an inner surface of the container body 10, causing the second fluid to be interposed between the first fluid and the inner surface of the container body. This eliminates deterioration of the container body due to corrosion of the container body by the fact that the first fluid has contact with the inner surface of the container body, as well as scale precipitation from the first fluid.

## Description

### Technical Field

The present invention relates to a fluid container that can contain a predetermined fluid without making contact with an inner surface of the container, and a heat exchange apparatus that uses the fluid container to perform heat exchange by direct contact between two fluids.

### Background Art

A heat exchanger that transfers heat (i.e., performs heat exchange) between a high-temperature fluid and a low-temperature fluid may be used. For efficient heat exchange in this heat exchanger when the two fluids are both in a liquid phase, a plate-type heat exchanger has been widely used. This plate-type heat exchanger has a structure in which a plurality of substantially plate-shaped plates are stacked in parallel at predetermined intervals to form flow channels between the respective plates, and the high-temperature fluid and the low-temperature fluid flow in the flow channels alternately every other plate to exchange heat through the respective plates each serving as a heat transfer surface.

For this plate-type heat exchanger, a liquid-phase fluid serving as a heat source may contain scale components or have corrosive properties. This may cause problems of scale adhesion and corrosion. Such problems make this plate-type heat exchanger unable to provide its heat exchange performance correctly, thus requiring regular maintenance and increasing operation cost.

To prevent rust and corrosion due to the liquid-phase fluid, making each plate of a corrosion-resistant thin metal plate or performing some surface treatment for protecting each plate may be possible. However, such adoption of corrosion-resistant materials or such surface treatment causes an increase in cost, thus making the overall manufacturing cost of the heat exchanger excessive.

To solve such a problem due to the heat exchange performed through the heat transfer surface such as the plate, a heat exchanger that can perform heat exchange by making direct contact between liquid-phase fluids has been proposed.

One example of such a conventional direct contact heat exchanger may be found in JP 8-82490 A.

### Citation List

### Patent Literature

Patent Literature 1: JP 8-82490 A

### Summary of Invention

### Technical Problem

The conventional heat exchanger brings the fluids for heat exchange into directly contact with each other as described in the above Patent Literature 1 and thus it can eliminate the need for the plate serving as the heat transfer surface.

However, such a conventional heat exchanger still requires a shell (outer shell container) that temporarily contains therein a liquid-phase fluid serving as a heat source and whose inner wall surface contacts with this liquid-phase fluid. When this heat source fluid is a liquid having corrosive properties or scale precipitation properties such as geothermal water (hereinafter, a corrosive liquid, for example), the container containing such a corrosive liquid has a risk of damage due to corrosion as well as a need for frequent maintenance, and thus needs to use an expensive metal having higher corrosive properties, or apply a lining or coating with a resin or the expensive metal on an inner surface of the container, or provide electrochemical corrosion protection on the inner surface of the container. This also entails high cost.

Additionally, in terms of cost, it is extremely difficult to economically manufacture a large heat exchanger or a heat exchanger having a robust structure that can be used in a high-temperature and high-pressure range, that is, a heat exchanger in which the amount of expensive material increases to have high strength.

The present invention has been made to solve the above-mentioned problems, and it is an object of the present invention to provide a fluid container that can prevent a container available for a heat exchanger and the like from being in contact with a heat source fluid and stably hold the heat source fluid, even if a low-quality heat source fluid having corrosive properties and the like, in the container to perform heat recovery and the like, and that can easily have a state in which deterioration inside the container hardly occurs without using high-cost members and achieve a structure having excellent maintainability and easy to maintain good performance while reducing an increase in manufacturing cost, as well as a heat exchange apparatus using the same.

### Solution to Problem

An aspect of the present invention provides a fluid container including: a container body that is configured to contain a fluid in a space portion inside the container body and to allow both of a first fluid having a corrosive property to a metal and/or a property of a scale being easily precipitated and a second fluid having a higher specific gravity than and being insoluble in the first fluid to flow into and out of the container body; a first fluid supply unit that is configured to supply the first fluid into the container body from outside the container body; a second fluid supply unit that is configured to supply the second fluid into the container body with the second fluid following an inner surface of the container body, at a predetermined height position located above a supply position of the first fluid in the container body; a first fluid discharge unit that is configured to discharge the first fluid to outside the container body from a position located above the supply position of the first fluid in the container body and below the supply position of the second fluid; and a second fluid discharge unit that is configured to discharge the second fluid to outside the container body from a predetermined portion located below the supply position of the first fluid in the container body, wherein: the inner surface of the container body at least in a height range in which the first fluid is allowed to exist inside the container body is formed to be inclined so as to be expanded open upward to form an inclined portion; and the second fluid is supplied by the second fluid supply unit over the entire circumference of the inner surface of the container body to surround the space portion inside the container body, flows down while forming a layer of fluid at least along the inner surface of the inclined portion, and reaches a discharge position of the second fluid in the container body.

As described above, this fluid container allows both of the first fluid and the second fluid to flow into and out of the container body, wherein the second fluid is supplied into the container body by the second fluid supply unit to form the layer of the second fluid along the inner surface of the container body, causing a situation in which the layer of the second fluid is interposed between the first fluid existing inside the container body and the inner surface of the container body, and causing the second fluid flowing down along the inner surface of the container body to significantly reduce the opportunity for contact of the first fluid with the inner surface of the container body while the first fluid exists inside the container body. This eliminates or reduces deterioration of the container body due to, for example, corrosion of the inner surface of the container body due to the fact that the first fluid having flowed into the container body has contact with the inner surface of the container body, as well as scale precipitation from the first fluid having contact with the inner surface of the container body and adhesion of this scale to the inner surface of the container body, and allows the first fluid to exist inside the container body without any problem.

Further, heat exchange occurs between the first fluid and the second fluid that are in direct contact with each other inside the container body, and thus, if the container body is used as the heat exchange apparatus that performs heat exchange between the first fluid and the second fluid, it is possible to perform heat exchange without causing deterioration of the apparatus, and to obtain the second fluid whose temperature has been changed to a desired value, even if the first fluid has corrosive properties to metals and/or properties of scales being easily precipitated.

Optionally, the fluid container according to the aspect of the present invention has a preferable configuration in which: the container body has the inclined portion of the inner surface formed in a substantially conical surface shape; and the second fluid supply unit is further configured to supply the second fluid in a supply direction having a velocity component in a tangential direction of a circumference of a cross section of the inclined portion of the container body, such that the second fluid helically flows down on the inner surface of the inclined portion to form a layer of fluid along the inner surface.

As described above, this fluid container has the inclined portion of the container body formed in the substantially conical surface shape, and imparts, in supplying the second fluid by the second fluid supply unit to the inclined portion of the container body, the velocity component in the tangential direction of the circumference in the circular cross-sectional shape of the inclined portion, to the flow of the second fluid, enabling the second fluid to helically flow down the inclined portion, and the centrifugal force accompanying the helical flow to be applied to the second fluid. This can further increase adhesion of the second fluid flow to the inner surface of the container body, and make the layer of the second fluid more difficult to peel off from the inner surface of the container body against the inward first fluid flow, thus enabling the inner surface of the container body to be reliably isolated and protected from the first fluid.

Optionally, the fluid container according to the aspect of the present invention has a preferable configuration in which the container body is further configured to include a ridge-shaped guide portion that guides a helical flow of the second fluid, disposed on the inclined portion of the inner surface.

As described above, this fluid container guides the second fluid by the guide portion to facilitate the helical flow of the second fluid, thus causing the helical flow to be maintained in a wide range of the inclined portion, and easily adhering of the second fluid to the inner surface of the container body by the centrifugal force of the helical flow to extend to the lower portion of the inclined portion, making it possible to still hardly peel off the second fluid layer from the inner surface, thus enabling the inner surface of the container body to be reliably protected against the first fluid.

Optionally, the fluid container according to the aspect of the present invention has a preferable configuration in which: electrical conductivity of the second fluid in a predetermined stage after discharged from the container body by the second fluid discharge unit is measured, allowing a mixing degree of the first fluid in the second fluid to be acquired from the measured electrical conductivity.

As described above, this fluid container allows the electrical conductivity of the second fluid that has been taken out from the container body to be measured, and a difference in electrical conductivity between the first fluid and the second fluid to be used for acquiring the mixing degree of the first fluid from a deviation between the measured value and an authentic value for the electrical conductivity of only the second fluid, making it possible to deduce the presence or absence and the outflow amount of the first fluid flowing out that accompanies the second fluid taken out from the container body. This enables adjusting and controlling the respective flow rates of the first fluid and the second fluid so as to eliminate or reduce the outflow of the first fluid from wrong positions, or taking measures to appropriately collect the first fluid according to its mixing degree from the second fluid that has been taken out from the container body, and reliably preventing such a situation that the first fluid mixed into the second fluid may have negative effects on the flow path of the second fluid and the container body in cyclic use of the second fluid.

Another aspect of the present invention provides a heat exchange apparatus including the fluid container as described above, wherein: a high-temperature heat source fluid is used as the first fluid, a liquid-phase heat medium subjected to heat exchange with the heat source fluid is used as the second fluid, and the heat exchange is performed by making direct contact between the first fluid and the second fluid in the container body; and the second fluid supply unit is further configured to reintroduce the second fluid that has been discharged from the container body by the second fluid discharge unit to reach outside of the container body and has exchanged heat with another medium for heat exchange, and to supply the reintroduced second fluid into the container body, allowing for cyclic usage of the second fluid.

As described above, this heat exchange apparatus uses a situation in which the first fluid flowing through the inside of the container body and the second fluid flowing along the inner surface of the container body are in direct contact with each other, to perform heat exchange between the first fluid and the second fluid, and takes out the heat-exchanged second fluid from the container body to the outside to perform further heat exchange with another medium for heat exchange, and then guide this second fluid to the second fluid supply unit to be supplied into the container body. These processes are repeated to use the second fluid as the heat medium to transfer heat while being circulated, thus causing the heat exchange between the first fluid and the second fluid to be performed while eliminating or reducing corrosion and scale generation in the container body, as well as heat of the first fluid to be transferred to a desired medium for heat exchange via the second fluid. This enables the path in which the first fluid flows in the entire heat utilization system to be kept to the minimum necessary and to be isolated from the surroundings, allowing for effective use of the heat held by the first fluid while preventing the occurrence of the problems due to the first fluid that has corrosive properties and like and is difficult to handle.

Optionally, the heat exchange apparatus according to the other aspect of the present invention has a preferable configuration further including supply means that is configured to supply the second fluid to a region inside the container body in which the first fluid exists, separately from an amount of supply by the second fluid supply unit, wherein the supply means is further configured to spray the second fluid into the first fluid, causing droplets of the second fluid to settle out in the first fluid, and then the droplets of the second fluid that have passed through the region in which the first fluid exists to merge into the second fluid supplied from the second fluid supply unit.

As described above, this heat exchange apparatus supplies and sprays the second fluid into the first fluid flowing through the container body by using the supply means, separately from the second fluid flowing along the inner surface of the container body, causing this second fluid to pass through the first fluid and then finally to merge into the amount of second fluid that has flowed along the inner surface of the container body, and enabling both second fluids to be taken out collectively as the second fluid. Thus, in the heat exchange between the first fluid and the second fluid that are different in temperature, it is possible to increase an opportunity for contact between the first fluid and the second fluid to perform heat exchange efficiently, and to bring the temperature of the second fluid closer to that of the first fluid with such heat exchange.

Optionally, the heat exchange apparatus according to the other aspect of the present invention has a preferable configuration further including a settling tank that is configured to allow the first fluid that has been taken out from inside the container body to outside the container body by the first fluid discharge unit to be introduced into the settling tank, wherein the settling tank is further configured to retain a predetermined amount of the first fluid, causing the second fluid that has been mixed into the first fluid in the container body to settle out and thus to be separable from the first fluid.

As described above, this heat exchange apparatus causes the first fluid that has been taken out of the container body by the first fluid discharge unit to flow through the settling tank, and, while the first fluid that has been taken out of the container body is retained in the settling tank, the second fluid having high specific gravity and having been mixed into the first fluid to settle out, and then the first fluid and the second fluid to separate in layers from each other, thus enabling the second fluid to be collected. Consequently, even if the amount of the second fluid taken into the flow of the first fluid and taken out together with the first fluid at the first fluid discharge unit increases as the opportunity for contact with the first fluid increases, it is possible to separate the second fluid from the first fluid at the settling tank for collection, and to prevent the second fluid from being erroneously drawn away from the container body together with the first fluid and being lost, thus making it possible to effectively use the second fluid and reduce a cost required for replenishing the second fluid.

### Brief Description of Drawings

FIG. 1 is a schematic view illustrating the configuration of a power generation system using a heat exchange apparatus according to a first embodiment of the present invention;
FIG. 2 is a schematic cross-sectional view of the heat exchange apparatus according to the first embodiment of the present invention;
FIG. 3 is a plan view illustrating the flowing down of a second fluid in the heat exchange apparatus according to the first embodiment of the present invention;
FIG. 4 is an enlarged cross-sectional view of a lower part of an inclined portion in the flowing of each fluid in the heat exchange apparatus according to the first embodiment of the present invention;
FIG. 5 is a schematic view illustrating the arrangement of a settling tank in another example of the heat exchange apparatus according to the first embodiment of the present invention;
FIG. 6 is a schematic cross-sectional view of a heat exchange apparatus according to a second embodiment of the present invention;
FIG. 7 is a plan view illustrating the flowing down of a second fluid in the heat exchange apparatus according to the second embodiment of the present invention;
FIG. 8 is a schematic view illustrating the arrangement of guides in another example of the heat exchange apparatus according to the second embodiment of the present invention;
FIG. 9 is an enlarged cross-sectional view of a lower part of an inclined portion in the flowing of each fluid in the other example of the heat exchange apparatus according to the second embodiment of the present invention;
FIG. 10 is an enlarged cross-sectional view of a lower part of an inclined portion in the flowing of each liquid in still another example of the heat exchange apparatus according to the second embodiment of the present invention; and
FIG. 11 is a schematic cross-sectional view of the main part of a heat exchange apparatus according to another embodiment of the present invention.

### Description of Embodiments

### (First Embodiment of the Present Invention)

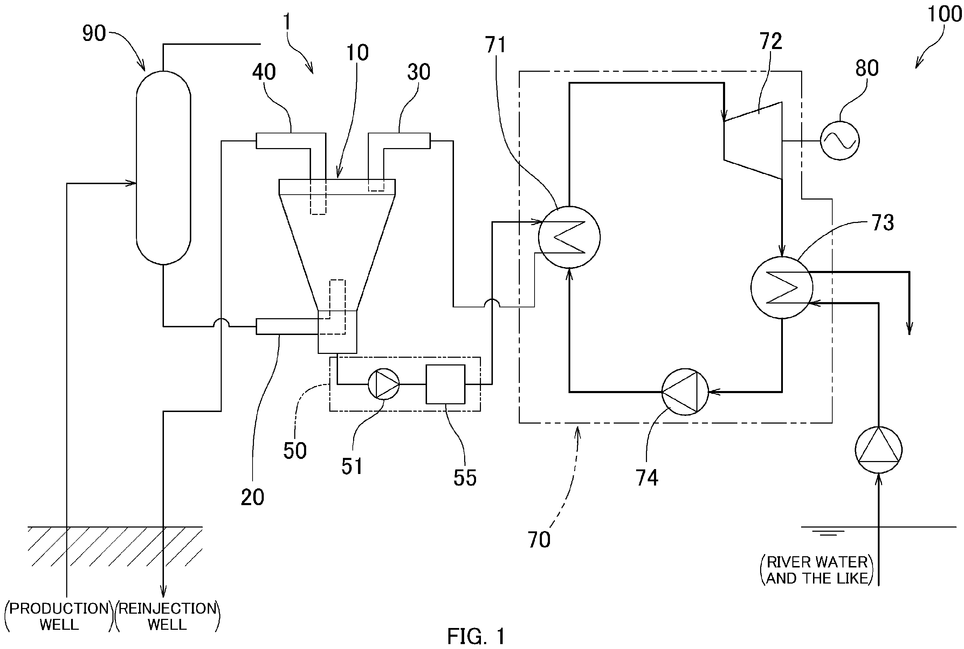

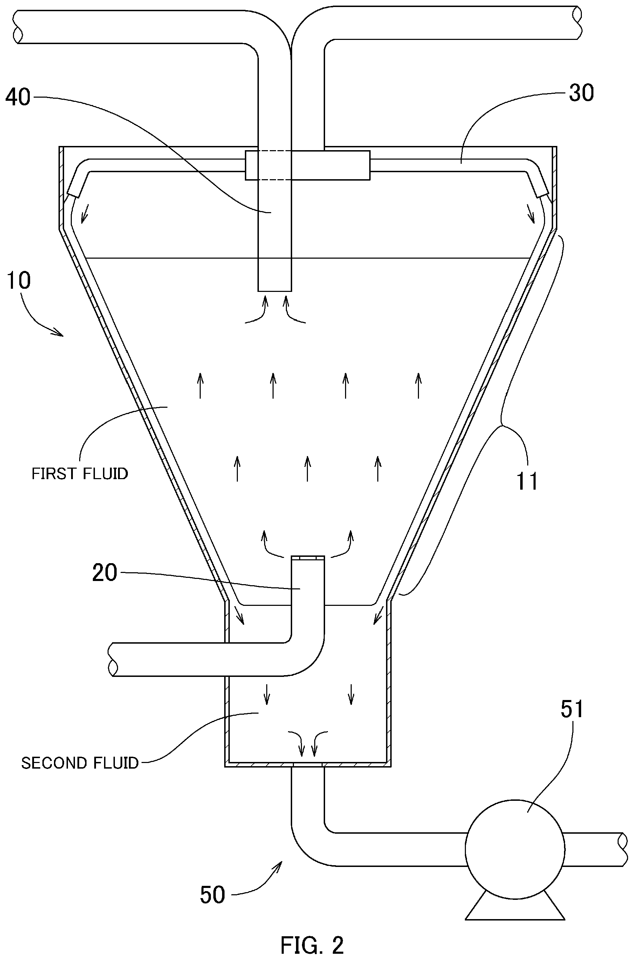

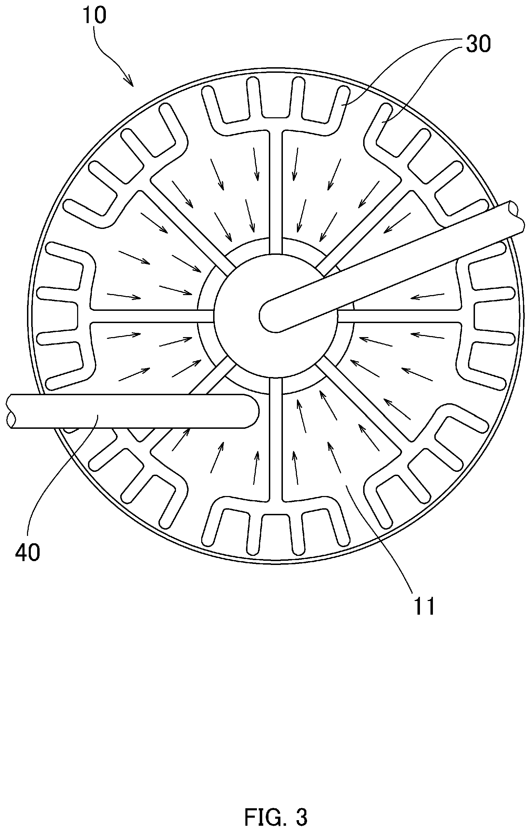

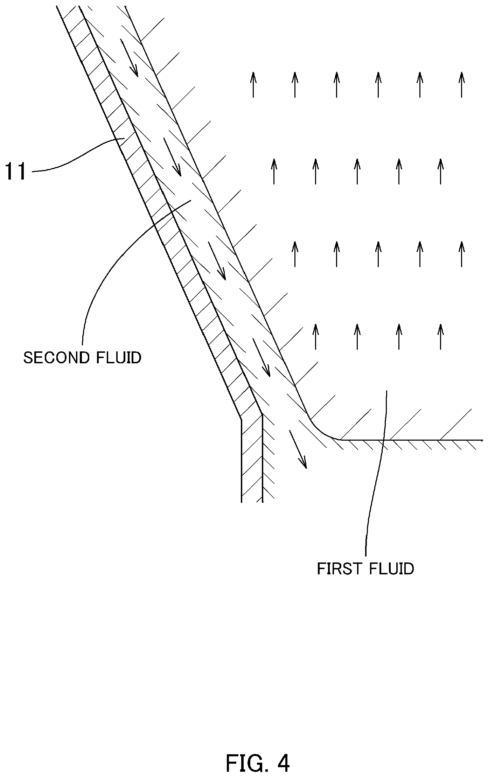

Hereinafter, the first embodiment of the present invention will be described with reference to FIGS. 1 to 4. This embodiment describes an example of a heat exchange apparatus used in a geothermal power generation system that converts heat of a geothermal fluid into motive power by a binary cycle method to generate electric power.

In the above respective figures, a heat exchange apparatus 1 according to this embodiment includes: a container body 10 that allows each of a predetermined first fluid and a second fluid having a higher specific gravity than the first fluid and insoluble in the first fluid to flow through inside the container body 10; a first fluid supply unit 20 that allows the first fluid to be supplied into the container body 10 from the outside; a second fluid supply unit 30 that supplies the second fluid into the container body 10 at a position having a predetermined height position located above a supply position of the first fluid in the container body 10; a first fluid discharge unit 40 that allows the first fluid to be discharged from inside the container body 10 to the outside; and a second fluid discharge unit 50 that discharges the second fluid from a predetermined portion of the container body 10 to the outside.

The heat exchange apparatus 1 according to this embodiment uses a high-temperature and liquid-phase heat source fluid as the first fluid, and uses a liquid-phase heat medium subjected to heat exchange with the heat source fluid as the second fluid, and performs heat exchange by making direct contact between the first fluid and the second fluid in the container body 10. This heat exchange apparatus 1 is used as a part of a geothermal power generation system 100, together with: a steam power cycle unit 70 that converts thermal energy that a working fluid has obtained, into motive power; and a generator 80 that generates electric power using the motive power converted from the thermal energy by the steam power cycle unit 70.

The steam power cycle unit 70 includes: an evaporator 71 that performs heat exchange between the heat medium (i.e., the second fluid) having flowed out of the heat exchange apparatus 1 and the working fluid to evaporate the working fluid to obtain a gas-phase working fluid; an expander 72 that operates upon introduction of the gas-phase working fluid and converts thermal energy held by this working fluid into motive power; a condenser 73 that condenses the gas-phase working fluid having flowed out of the expander 72 into a liquid-phase working fluid by performing heat exchange between that gas-phase working fluid and a low-temperature fluid; and a pump 74 that takes out the liquid-phase working fluid from the condenser 73 and sends the taken-out liquid-phase working fluid into the evaporator 71. These respective devices that constitute this steam power cycle unit 70 are well-known devices similar to those used in a system that uses a general steam power cycle such as, for example, the Rankine cycle, and a description thereof will be omitted.

The generator 80 is similar to what is used for power generation using an expander 72 as a drive source, such as, for example, a turbine in a well-known steam power cycle, and a detailed description thereof will be omitted.

With respect to the steam power cycle unit 70, the heat exchange apparatus 1 heats the second fluid by the heat exchange with the first fluid and increases the temperature of the second fluid to such an extent that the working fluid can be phase-changed to a gas phase when the second fluid as the heat medium to be introduced into the evaporator 71 of the steam power cycle unit 70 performs indirect heat exchange with the working fluid through a heat transfer surface of the evaporator 71.

The first fluid is a high-temperature liquid-phase heat source fluid derived from geothermal heat. More specifically, a high-temperature and high-pressure geothermal fluid taken out from the ground (production well) in a geothermal area is passed through a gas-liquid separator 90, and its liquid-phase component separated from its gas-phase component is used as the first fluid. This first fluid is derived from the geothermal fluid and thus it has corrosion properties to metals as well as properties of scales such as silica being easily precipitated. Additionally, high-temperature hot spring water (hot water) bubbling up or drawn up from a hot spring can also be used as the heat source fluid which will be the first fluid.

The second fluid is a liquid having properties of a higher specific gravity than and being insoluble in the first fluid whose main component is water, for example, a fluorine compound-based liquid, and has characteristics such as, for example, a higher boiling point and higher insulation properties than water.

The container body 10 is configured to be substantially box-shaped and capable of containing a liquid in a space portion inside the container body 10, and to allow each of the first fluid having corrosion properties to metals and/or properties of scales being easily precipitated and the second fluid having a higher specific gravity than and being insoluble in that first fluid to flow in and out, enabling the first fluid and the second fluid to flow through inside the container body 10.

An inner surface of the container body 10 in a predetermined range in a height direction is formed, as an inclined portion 11, to be inclined so as to be expanded open upward (i.e., to flare out upward into a funnel shape). The second fluid flows down along the inclined portion 11, which is an inclined part of this inner surface, and the first fluid, which is supplied from the first fluid supply unit 20 below and collected by the first fluid discharge unit 40 above and then discharged to the outside, is present inside the container body 10 and inward from the inclined portion 11. In other words, the size of the inclined portion 11 of the container body 10 is set such that the inclined portion 11 must include the inner surface of the container body 10 in a height range in which the first fluid may exist inside the container body 10.

The inclined portion 11 of the container body 10 may be arranged to extend up to an upper end of the container body 10, or may be arranged such that another shape portion such as a cylindrical shape portion exists on the top of the inclined portion 11. On the other hand, the container body 10 may have the inclined portion 11 continuously extending to a lower end thereof, or may have another shape portion such as a cylindrical shape portion present on the bottom of the inclined portion 11.

The first fluid supply unit 20 is configured to supply the first fluid (heat source fluid) into the container body 10 from the outside. More specifically, the geothermal fluid taken out from the production well in the geothermal area is introduced into the gas-liquid separator 90 to separate its liquid-phase component from its gas-phase component. This first fluid supply unit 20 takes out a liquid-phase heat source fluid, which is obtained by such separation, from the gas-liquid separator 90 as the first fluid, and guides it into the container body 10.

A position of supplying the first fluid by the first fluid supply unit 20 is set to a position slightly above the same height position as a lower end of the inclined portion 11 of the container body 10. This enables a lower end of a boundary surface between the first fluid supplied and flowed into the container body and the second fluid to easily fall within a certain height range of the inclined portion 11 of the container body 10.

Further, the first fluid supply unit 20 is also configured in such a manner that a substantially tubular portion thereof located inside the container body 10 as a part of a supply path is introduced and disposed into the container body 10 from the lower side of the container body 10, and an outlet thereof through which the first fluid flows out is the top of the first fluid supply unit 20 inside the container body 10. This prevents the first fluid supply unit 20 from being attached to the inner surface of the inclined portion 11 of the container body 10 or being disposed through the inclined portion 11, and enables the first fluid supply unit 20 not to prevent the flow of the second fluid along the inclined portion 11.

The second fluid supply unit 30 supplies the second fluid into the container body 10 with the second fluid following the inner surface of the container body 10, at a predetermined height position inside the container body 10 which is above the position of supplying the first fluid by the first fluid supply unit 20.

The second fluid supply unit 30 is introduced and disposed into the container body 10 from the upper side of the container body 10, and its lowermost outlet for supplying the second fluid is located at a position closest to the inclined portion 11 inside the container body 10. This prevents the second fluid supply unit 30 from being attached to the inner surface of the inclined portion 11 of the container body 10 or being disposed through the inclined portion 11, and enables the second fluid supply unit 30 not to prevent the flow of the second fluid along the inclined portion 11.

The second fluid is supplied by this second fluid supply unit 30 over the entire circumference of the inner surface of the container body 10 to surround the space portion inside the container body 10. The second fluid flows down while forming a layer of liquid mainly along the inner surface of the inclined portion 11 in the container body 10, and reaches a second fluid discharge position in a lower part of the container body 10.

A position of supplying the second fluid by the second fluid supply unit 30 is set to a position slightly above an upper end position of the inclined portion 11 inside the container body 10. This enables the second fluid supplied and flowed into the container body 10 to cover the whole inclined portion 11.

The flow rate of the second fluid supplied into the container body 10 by the second fluid supply unit 30 is controlled to maintain, throughout the entire inclined portion 11 of the container body 10, a state in which a layer of the second fluid exists between the inner surface of the container body 10 and the first fluid while the first fluid exists inside the container body 10.

In the supply of the second fluid from the second fluid supply unit 30, it may be possible to, for example, form or provide irregularities or a rough surface having a rectifying effect at a portion of the inner surface of the container body 10 which is first in contact with the second fluid, enabling the flow of the second fluid to be uniform when reaching an inclined surface of the inclined portion 11, and thus enabling the second fluid to flow down along the inclined surface much more without unevenness.

The first fluid discharge unit 40 is configured to discharge the first fluid to the outside from a predetermined height position inside the container body 10 which is above the position of supplying the first fluid by the first fluid supply unit 20 and below the position of supplying the second fluid by the second fluid supply unit 30.

The first fluid discharge unit 40 is also configured in such a manner that a substantially tubular portion thereof located inside the container body as a part of a discharge path for receiving the first fluid and guiding the first fluid to the outside of the container body 10 is introduced into the container body 10 from the upper side of the container body 10 and provided away from the inclined portion 11 of the container body 10, and an inlet of the first fluid discharge unit 40 for receiving the first fluid is the lowermost part of the first fluid discharge unit 40 inside the container body 10. This prevents the first fluid discharge unit 40 from being attached to the inner surface of the inclined portion 11 of the container body 10 or being disposed through the inclined portion 11, and enables the first fluid discharge unit 40 not to prevent the flow of the second fluid along the inclined portion 11.

The second fluid discharge unit 50 discharges the second fluid to the outside from a predetermined portion of the container body 10 which is below the position of supplying the first fluid by the first fluid supply unit 20, and includes, in addition to a conduit serving as a discharge path, a pump 51 that supplies the second fluid to the evaporator 71 of the steam power cycle unit 70.

The second fluid discharge unit 50 is connected to the inside of the container body 10 at the lower part of the container body 10 to receive the second fluid into its discharge path. Inside the container body 10, the second fluid that has flowed down along the inner surface of the inclined portion 11 of the container body 10 collects in the lower part inside the container body 10 to form a lowermost layer and exist independently, based on the fact that the second fluid has the higher specific gravity than the first fluid. In such a state, the position of the boundary surface between the second fluid and the first fluid inside the container body 10 is kept almost constant by bringing the discharge amount of the second fluid guided and discharged to the outside of the container body 10 by the second fluid discharge unit 50 to an appropriate amount.

The second fluid that has been discharged from the container body 10 by the second fluid discharge unit 50 and reached the outside is supplied to the evaporator 71 of the steam power cycle unit 70 by the pump 51, and exchanges heat with the working fluid while passing through the evaporator 71, and then is introduced into the second fluid supply unit 30 again. This is such a mechanism that this reintroduced second fluid is supplied into the container body 10 by the second fluid supply unit 30 to allow for cyclic usage of the second fluid.

Additionally, a measurement unit 55 that can measure electrical conductivity of a liquid flowing inside is provided in the discharge path of the second fluid discharge unit 50.

The measurement unit 55 measures the electrical conductivity of the second fluid at a stage after the second fluid has been discharged from the container body 10 by the second fluid discharge unit 50 and before it reaches the evaporator 71, allowing for acquisition of a mixing degree of the first fluid in the second fluid from the electrical conductivity obtained by this measurement.

This enables, in a situation where a part of the first fluid is accidentally drawn into the flow of the second fluid to reach the lower portion inside the container body 10 and is discharged together with the second fluid from inside the container body 10 by the second fluid discharge unit 50, acquisition of the mixing degree of the first fluid in the second fluid and adjustment of the respective flow rates of the first fluid and the second fluid based on the acquired mixing degree. This allows the mixing of the first fluid into the second fluid to be eliminated or reduced.

In the above example of this embodiment, the first fluid continuously flows into and out of the container body 10 by the first fluid supply unit 20 and the first fluid discharge unit 40. The present invention is not limited to this state. For example, in a state where an appropriate amount of the first fluid exists in the container body 10, the inflow and outflow of the first fluid may be stopped without operating the first fluid supply unit 20 and the first fluid discharge unit 40, causing the first fluid to be retained (stored) inside the container body 10 for a predetermined time.

Next, a use state of the heat exchange apparatus 1 based on the above configuration will be described. The first fluid as the high-temperature and liquid-phase heat source fluid is assumed to employ a liquid-phase component (about 200 °C), of the geothermal fluid taken out from the production well of the geothermal area, separated from its gas-phase component through the gas-liquid separator 90. Further, the low-temperature fluid to be introduced into the condenser 73 of the steam power cycle unit 70 is assumed to employ outside air or water such as river water which exists around the steam power cycle unit 70. Furthermore, the second fluid as the heat medium is assumed to employ a fluorine compound-based liquid having a higher specific gravity than and being insoluble in the first fluid whose main component is water, and having a higher boiling point than water, which is, for example, Florinate (registered trademark).

In the heat exchange apparatus 1, the second fluid supply unit 30 in the upper portion of the container body 10 supplies and sends out the second fluid as the heat medium, from the predetermined height position in the vicinity of the upper end of the inclined portion 11 inside the container body 10, enabling the second fluid to flow down along the inner surface of the container body 10. The second fluid supplied by the second fluid supply unit 30 flows down over the entire inner surface of the container body 10 to surround the space portion inside the container body 10, and forms the liquid layer along the inner surface of the inclined portion 11. Then, the second fluid flows down along the inner surface of the inclined portion 11 and reaches the lower portion of the container body 10.

On the other hand, the first fluid as the high-temperature and liquid-phase heat source fluid taken out from the gas-liquid separator 90 is supplied from the first fluid supply unit 20 in the lower portion of the container body 10, and flows into the container body 10.

Since the first fluid and the second fluid are insoluble in each other, these two liquids are not mixed inside the container body 10 and maintain their separated state.

The position of supplying the first fluid by the first fluid supply unit 20 is set to the position slightly above the height position of the lower end of the inclined portion 11 inside the container body 10, and the first fluid having flowed into the container body 10 ascends inside the container body 10 while surrounded by the second fluid along the inclined portion 11. This causes the second fluid flowing down along the inclined portion 11 and the first fluid flowing through a region inside this flow of the second fluid to be in direct contact with each other while keeping them separate from each other, proceeding with the heat exchange between the first fluid and the second fluid which are in contact with each other.

The flow of the second fluid along the inner surface of the inclined portion 11 and the flow of the first fluid ascending inside the flow of the second fluid are opposite in direction to each other, and thus the first fluid and the second fluid perform the heat exchange in a countercurrent flow relationship.

Causing the second fluid to flow down along the inclined inner surface of the inclined portion 11 by the second fluid supply unit 30 enables the flow of the second fluid to be easily adhered on the inner surface of the inclined portion 11 based on the difference in specific gravity between the first fluid and the second fluid, and the flowing-down speed of the second fluid to be reduced by the amount of the flow direction being obliquely downward, allowing the layer of the second fluid along the inner surface of the inclined portion 11 to be adhered on that inner surface and hardly disappear. This allows for appropriate isolation of the inner surface of the inclined portion 11 from the first fluid.

Additionally, in the flowing-down of the second fluid along the inclined portion 11, there is no particular obstacle to the flow of the second fluid which protrudes from the inner surface of the inclined portion 11 or penetrates the inclined portion 11, and thus the flow of the second fluid along the inclined portion 11 is smoothly continuous without being hindered in the middle, preventing the layer of the second fluid along the inner surface of the inclined portion 11 from being partially interrupted and then the first fluid from being in contact with the inner surface of the inclined portion 11.

The second fluid having flowed down along the inclined portion 11 passes over the height position at which the first fluid is supplied by the first fluid supply portion 20, leaves the inclined portion 11 and reaches the lower portion of the container body 10, and completes direct heat exchange due to the contact with the first fluid. Then, the second fluid is gradually guided to the outside of the container body 10 and discharged from the container body 10 by the second fluid discharge unit 50, via a region of the lowermost layer of the second fluid in which the second fluid having the higher specific gravity than the first fluid has collected in the lower part inside the container body 10.

Further, the first fluid that has ascended inside the container body 10 and reached near the height position of the upper end of the inclined portion 11 in the upper portion of the container body 10 flows into the discharge path of the first fluid discharge unit 40 from the inlet of the first fluid discharge unit 40 located at that height position, and is directly guided to the outside of the container body 10 and discharged from the container body 10. The first fluid that has been discharged to the outside of the container body 10 by the first fluid discharge unit 40 is sent to another heat exchange apparatus in a rear stage to be used for further heat exchange, or sent to a reinjection well of the geothermal area to be returned to the ground.

Setting the supply position of the first fluid supply unit 20 to the position above the discharge position of the second fluid discharge unit 50 causes the first fluid to hardly reach the lower portion of the container body 10 where the second fluid cannot exist, and setting the discharge position of the first fluid discharge unit 40 to the position below the supply position of the second fluid supply unit 30 causes the first fluid to hardly reach the upper portion of the container body 10 where the second fluid does not exist. This enables the first fluid to stay within the height range where the inclined portion 11 exists in the container body 10, thus preventing the first fluid from existing in the vicinity of the container body 10 other than the inclined portion 11. Further, the layer of the second fluid is interposed between the first fluid and the inner surface of the container body in the inclined portion 11 to prevent the first fluid from having contact with the container body 10, thus eliminating or reducing adverse effects such as corrosion of the container body 10 due to the first fluid, and enabling reliable protection of the container body 10.

The second fluid that has been discharged to the outside of the container body 10 by the second fluid discharge unit 50 is sent to the evaporator 71 of the steam power cycle unit 70 by the pump 51 of the second fluid discharge unit 50.

On the way thus to the evaporator 71 through the discharge path of the second fluid discharge unit 50, the second fluid has its electrical conductivity measured by the measurement unit 55.

Since the electrical conductivity measured here is a value related to the mixing ratio of the conductive first fluid in the insulating second fluid, it is possible to acquire the mixing degree of the first fluid in the second fluid from the measured electrical conductivity, and adjust, based on the acquired mixing degree, the respective flow rates of the first fluid and the second fluid to prevent the first fluid from being discharged together with the second fluid.

For example, if the flow rate of the second fluid discharged from the container body 10 and guided to the evaporator 71 by the second fluid discharge unit 50 is too high, the second fluid to be discharged may exit from the container body 10 while drawing in the first fluid existing in the vicinity of the second fluid, and the second fluid may circulate between the heat exchange apparatus 1 and the evaporator 71 with a part of the first fluid mixed into the second fluid. This may cause adverse effects, such as metal corrosion or scale generation, on parts of the flow path of the second fluid.

In response to such a case, the flow rate of the second fluid may be adjusted (e.g., restricted) by controlling, for example, the operation of the pump, based on the mixing degree of the first fluid deduced from the measured electrical conductivity, thereby eliminating or reducing the mixing of the first fluid, and enabling only the second fluid to appropriately circulate and flow to the heat exchange apparatus 1 and the evaporator 71.

In the steam power cycle unit 70, the evaporator 71 performs heat exchange between the second fluid as the heat medium having flowed out of the heat exchange apparatus 1 and the working fluid. In the evaporator 71, the liquid-phase working fluid heated by heat exchange with the second fluid through the heat transfer surface of the evaporator 71 evaporates and changes to a gas phase with the rise of temperature, and this gas-phase working fluid flows out of the evaporator 71 and reaches the expander 72. In the expander 72, the gas-phase working fluid expands and activates the expander 72 to generate the motive power. This motive power of the expander 72 drives the generator 80 to generate the electric power, converting thermal energy into usable electric power. The gas-phase working fluid that has thus expanded and worked in the expander 72 decreases in pressure and temperature, and flows out of the expander 72 and then is introduced into the condenser 73.

In the condenser 73, the gas-phase working fluid introduced into the inside thereof exchanges heat with the low-temperature fluid separately introduced into the flow path with a heat transfer portion interposed between these two fluids, and the gas-phase working fluid condenses to a liquid phase as the gas-phase working fluid is cooled by the heat exchange. This liquid-phase working fluid flows toward the evaporator 71 via the pump 74 and, after returning to the inside of the evaporator 71, repeats the respective processes after the evaporation in the evaporator 71 in the same manner as described above.

The second fluid that has completed heat exchange in the evaporator 71 of the steam power cycle unit 70 flows from the evaporator 71 to the second fluid supply unit 30, and is supplied into the container body 10 to be subjected to heat exchange with the first fluid again. Thus, the second fluid circulates through a series of flow paths including the container body 10 and the evaporator 71, and repeats the heat exchange with the first fluid in the heat exchange apparatus 1 and the heat exchange with the working fluid in the evaporator 71.

As described above, the heat exchange apparatus according to this embodiment allows each of the first fluid, which is the high-temperature heat source fluid, and the second fluid, which is the heat medium, to flow into and out of the container body 10, wherein the second fluid is supplied into the container body 10 by the second fluid supply unit 30 to form the layer of the second fluid along the inner surface of the container body 10, and the layer of the second fluid is interposed between the first fluid existing inside the container body 10 and the inner surface of the container body 10, and then the second fluid flowing down along the inner surface of the container body 10 prevents the first fluid from having contact with the inner surface of the container body 10, thus eliminating or reducing corrosion of the container body 10 due to the fact that the first fluid flowing into the container body 10 has contact with the inner surface of the container body 10, as well as deterioration of the container body 10 due to the fact such as scale precipitation from the first fluid having contact with the inner surface of the container body 10 and adhesion of this scale to the inner surface of the container body 10. This allows the first fluid to exist inside the container body 10 without any problem, enabling the container body 10 to be used as a heat exchange apparatus that performs heat exchange between the first fluid and the second fluid.

In the heat exchange apparatus according to the above example of this embodiment, the inclined portion 11 of the container body 10 is configured to have the substantially conical surface shape. The configuration is not limited to this shape. As long as the inner surface is formed, as the inclined portion, to be inclined so as to be expanded open upward, the inclined portion may be also formed in a polygonal pyramid surface shape such as a triangular pyramid or a quadrangular pyramid, allowing the fluid layer formed by the second fluid flowing down along the inner surface of the inclined portion to be easily kept adhered on the inner surface, and allowing for appropriate isolation of the inner surface of the inclined portion from the first fluid, in the same manner as the above embodiment.

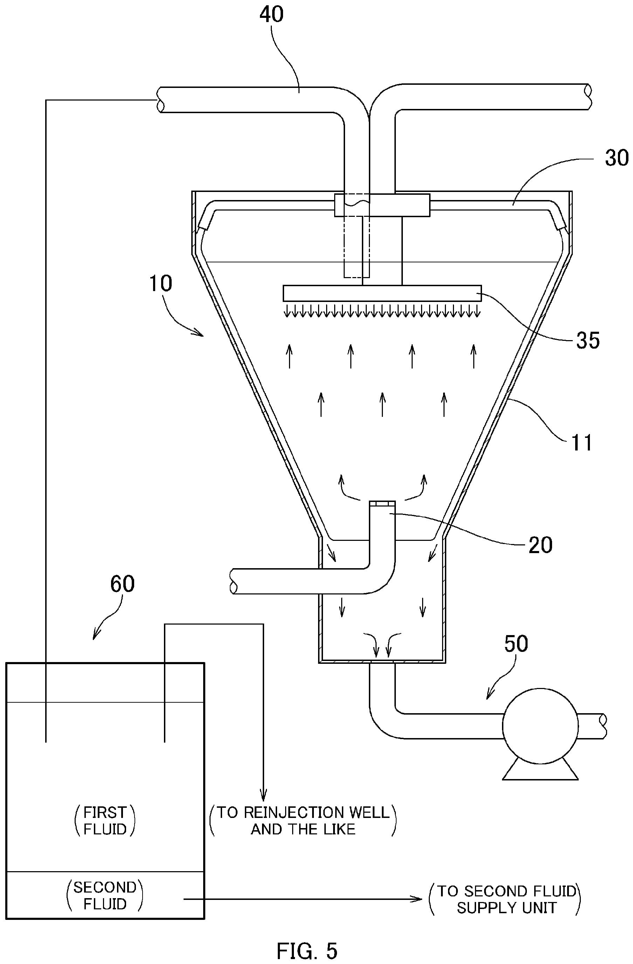

Further, in the heat exchange apparatus according to the above example of this embodiment, the second fluid is made to flow down along the inclined portion 11 of the container body 10 to form the layer of the second fluid along the inner surface of the container body 10, and the first fluid is made to flow through the region inside the container body 10 and inward from the layer of the second fluid, thereby enabling the first fluid and the second fluid around it to make direct contact with each other for heat exchange. In addition to this, another configuration as shown in FIG. 5 may be possible. This configuration includes supply means 35 for supplying the second fluid to a region inside the container body 10 in which the first fluid exists separately from an amount of supply by the second fluid supply unit 30. This supply means 35 sprays the second fluid into the first fluid. Droplets of the second fluid settle out in the first fluid, and then the droplets of the second fluid that have passed through the region where the first fluid exists merge into the second fluid supplied from the second fluid supply unit 30.

In this case, the second fluid supplied and sprayed into the first fluid using the supply means 35 separately from the second fluid flowing along the inner surface of the container body 10 also exchanges heat with the first fluid, and then finally merges into the amount of second fluid that has flowed along the inner surface of the container body 10, enabling both second fluids to be taken out collectively as the second fluid. Thus, in the heat exchange between the first fluid and the second fluid that are different in temperature, it is possible to increase an opportunity for contact between the first fluid and the second fluid to perform heat exchange efficiently, and to bring the temperature of the second fluid closer to that of the first fluid with such heat exchange.

For increasing the opportunity for contact between the first fluid and the second fluid, for example, separately supplying the second fluid using the supply means 35 as described above, it is preferable to provide a settling tank 60 into which the first fluid that has been taken out from inside the container body 10 to the outside by the first fluid discharge unit 40 can be introduced, as shown in FIG. 5. Here, it is preferable that a predetermined amount of the first fluid is retained in this settling tank 60, and the second fluid that has been mixed into the first fluid in the container body 10 settles out and is separated from the first fluid.

In the settling tank 60, while the first fluid that has been taken out of the container body 10 is retained therein, the second fluid having high specific gravity and having been mixed into the first fluid settles out, and the first fluid and the second fluid separate in layers from each other, thus enabling the second fluid to be collected. Consequently, even if the amount of the second fluid taken into the flow of the first fluid and taken out together with the first fluid by the first fluid discharge unit 40 increases as the opportunity for contact with the first fluid increases, it is possible to separate the second fluid from the first fluid by the settling tank 60 for collection, and to prevent the second fluid from being erroneously drawn away from the container body 10 together with the first fluid and being lost directly, thus making it possible to effectively use the second fluid having special properties and reduce a cost required for replenishing the second fluid.

Furthermore, the heat exchange apparatus according to the above example of this embodiment is configured to have the container body 10 as a main component of the heat exchange apparatus, in which, in the container body 10 into and out of which the first fluid and the second fluid are each allowed to flow, the second fluid is made to flow down along the inclined portion 11 of the container body 10 to form the layer of the second fluid along the inner surface of the container body 10, and the first fluid is made to flow through the region inside the container body 10 and inward from the layer of the second fluid, thereby allowing the first fluid and the second fluid around it to make direct contact with each other for heat exchange, and enabling the second fluid after heat exchange to be taken out of the container body 10 for use, and the like. In addition to this, another configuration may also be possible. For example, this configuration uses the second fluid to be circulated in the container body 10 mainly for isolating the first fluid from the inner surface of the container body 10, instead of using the second fluid as the heat medium, and uses the container body 10 as a liquid container that contains a predetermined amount of the first fluid, or a liquid tank that retains the first fluid for a predetermined time. This allows the first fluid to be taken in and out without any regard for impact on the container body 10 that contains the first fluid and to be used for various purposes.

### (Second Embodiment of the Present Invention)

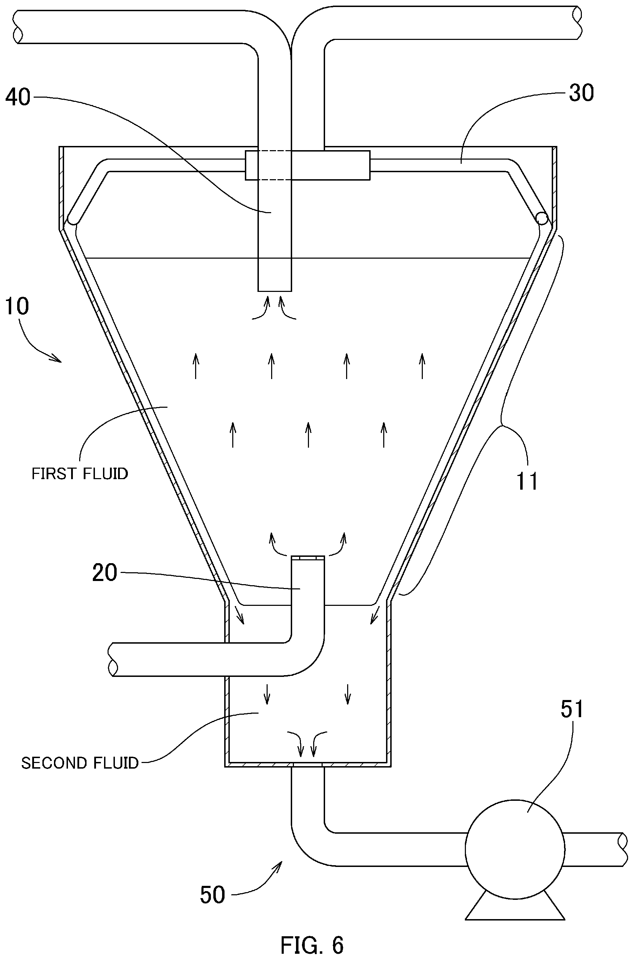

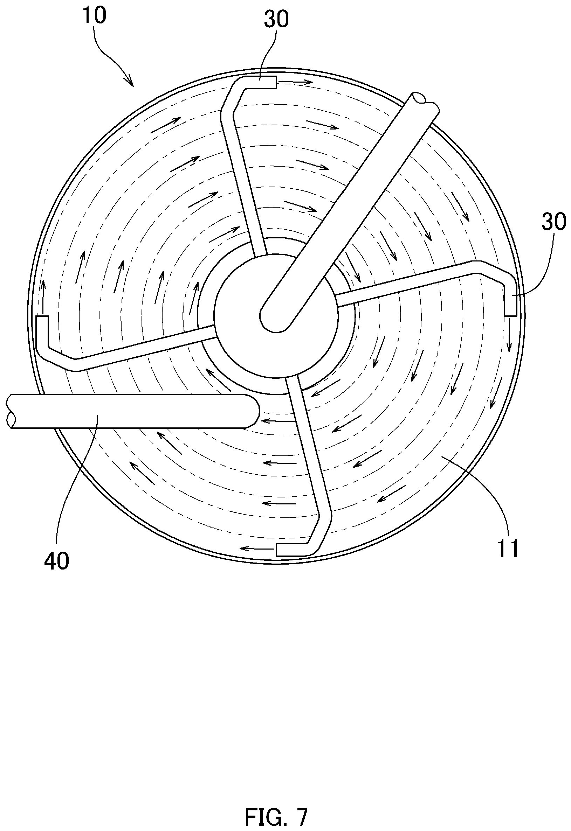

The second embodiment of the present invention will be described with reference to FIG. 6 and FIG. 7.

In the above respective figures, a heat exchange apparatus according to this embodiment includes the container body 10, the first fluid supply unit 20, the second fluid supply unit 30, the first fluid discharge unit 40, and the second fluid discharge unit 50, as in the above first embodiment, and, on the other hand, has a different configuration in which the second fluid supply unit 30 supplies the second fluid into the container body 10 in a different direction. Note that the container body 10, the first fluid supply unit 20, the first fluid discharge unit 40, and the second fluid discharge unit 50 are the same as those of the above first embodiment, whose detailed description will be thus omitted.

Further, the steam power cycle unit 70 and the generator 80 that form the geothermal power generation system 100 together with the heat exchange apparatus 1 are the same as those of the above first embodiment, and thus description thereof will be omitted.

The second fluid supply unit 30 supplies the second fluid into the container body 10 with the second fluid following the inner surface of the container body 10, at a predetermined height position inside the container body 10 which is above the position of supplying the first fluid by the first fluid supply unit 20, as in the above first embodiment, and, on the other hand, has a different configuration in which the second fluid is supplied to the inclined portion 11 having a substantially conical surface shape in the container body 10, in a supply direction having a velocity component in a tangential direction of a circumference of a cross section of the inclined portion 11.

The second fluid supply unit 30 is introduced and disposed into the container body 10 from the upper side of the container body 10, and has its lowermost outlet for supplying the second fluid located at one or more positions closest to the inclined portion 11 inside the container body 10, and has a mechanism to discharge and supply the second fluid to the inclined portion 11, in the supply direction having the velocity component in the tangential direction of the circumference of the cross section of the inclined portion 11, specifically, in a direction that coincides with the tangential direction at a respective predetermined position on the circumference of the cross section of the inclined portion 11, or in an oblique downward direction that is slightly inclined from the tangential direction.

The second fluid supply unit 30 supplies the second fluid in such a direction, thereby obtaining a state in which the flow of the second fluid that has flowed out of the second fluid supply unit 30 smoothly follows an inner circumference of the inclined portion 11, and the second fluid helically flows down on the inner surface of the inclined portion 11, and thus the second fluid is supplied over the entire circumference of the inner surface of the container body 10 to surround the space portion inside the container body 10.

Then, the second fluid forms, by helically flowing down on the inner surface of the inclined portion 11, a layer of the second fluid along the inner surface of the inclined portion 11.

A second fluid supply position of the second fluid supply unit 30 is set to a position that substantially coincides with the upper end position of the inclined portion 11 inside the container body 10. This enables the second fluid supplied and flowed into the container body 10 to cover the whole inclined portion 11 while helically flowing down.

The flow rate of the second fluid supplied into the container body 10 by the second fluid supply unit 30 is controlled to maintain, throughout the entire inclined portion 11 of the container body 10, a state in which a layer of the second fluid exists between the inner surface of the container body 10 and the first fluid.

The second fluid supply unit 30 is not attached to the inner surface of the inclined portion 11 of the container body 10 nor disposed through the inclined portion 11, and thus does not prevent the helical flow of the second fluid along the inclined portion 11, as in the above first embodiment.

Next, a use state of the heat exchange apparatus according to this embodiment will be described. As in the above first embodiment, the first fluid as the high-temperature and liquid-phase heat source fluid is assumed to employ the liquid phase component (about 200 °C.) of the geothermal fluid separated from its gas phase component by the gas-liquid separator. Further, the low-temperature fluid to be introduced into the condenser 73 of the steam power cycle unit 70 is assumed to employ outside air or water such as river water which exists around the steam power cycle unit 70. Furthermore, the second fluid as the heat medium is assumed to employ the fluorine compound-based liquid, for example, Florinate (registered trademark), which has the higher specific gravity than and is insoluble in the first fluid and further has a higher boiling point than water.

In the heat exchange apparatus 1, the second fluid supply unit 30 in the upper portion of the container body 10 discharges and supplies the second fluid as the heat medium in a predetermined direction along the inner circumference of the inclined portion 11, from one or more positions in the vicinity of the upper end of the inclined portion 11 in the container body, enabling the second fluid to helically flow down along the inner surface of the container body 10. The second fluid flows over the entire inner surface of the container body 10 to surround the space portion inside the container body 10, and forms the liquid layer along the inner surface of the inclined portion 11. Then, the second fluid maintains a state of helically flowing down along the inner surface of the inclined portion 11 until the lower part of the inclined portion 11, and finally reaches the lower portion of the container body 10.

On the other hand, as in the first embodiment, the first fluid as the high-temperature and liquid-phase heat source fluid taken out from the gas-liquid separator 90 is supplied from the first fluid supply unit 20 in the lower portion of the container body 10, and flows into the container body 10.

Since the first fluid and the second fluid are insoluble in each other, these two liquids are not mixed inside the container body 10 and maintain their separated state.

The position of supplying the first fluid by the first fluid supply unit 20 is set to the position slightly above the height position of the lower end of the inclined portion 11 inside the container body 10, and the first fluid having flowed into the container body 10 ascends inside the container body 10 while surrounded by the second fluid along the inclined portion 11. This causes the second fluid flowing down along the inclined portion 11 and the first fluid flowing through a region inside this flow of the second fluid to be in direct contact with each other while keeping them separate from each other, proceeding with the heat exchange between the first fluid and the second fluid which are in contact with each other.

The helical flow of the second fluid along the inner surface of the inclined portion 11 is a flow that gradually proceeds from top to bottom as viewed from the entire inclined portion 11, so that the spiral flow of the second fluid is opposite in direction to the flow of the first fluid ascending inside the helical flow of the second fluid, and thus it can be said that the first fluid and the second fluid perform heat exchange in a countercurrent flow relationship.

Causing the second fluid to helically flow down along the inner surface of the inclined portion 11 with the second fluid supply unit 30 enables the flow of the second fluid to be easily adhered on the inner surface of the inclined portion 11 based on the difference in specific gravity between the first fluid and the second fluid, and applies a centrifugal force accompanying the helical flow to the second fluid, allowing the layer of the second fluid along the inner surface of the inclined portion 11 to be strongly adhered on that inner surface and hardly disappear. This allows for appropriate isolation of the inner surface of the inclined portion 11 from the first fluid.

Additionally, in the flowing-down of the second fluid along the inclined portion 11, there is no particular obstacle to the helical flow of the second fluid which protrudes from the inner surface of the inclined portion 11 or penetrates the inclined portion 11, and thus the helical flow of the second fluid along the inclined portion 11 is smoothly continuous without being hindered in the middle, preventing the layer of the second fluid along the inner surface of the inclined portion 11 from being partially interrupted and then the first fluid from being in contact with the inner surface of the inclined portion 11.

The second fluid having helically flowed down along the inclined portion 11 passes over the height position at which the first fluid is supplied by the first fluid supply portion 20, leaves the inclined portion 11 and reaches the lower portion of the container body 10, and completes direct heat exchange due to the contact with the first fluid. Then, the second fluid is gradually guided to the outside of the container body 10 and discharged from the container body 10 by the second fluid discharge unit 50, via a region of the lowermost layer of the second fluid in which the second fluid having a higher specific gravity than the first fluid has collected in the lower part inside the container body 10.

Further, the first fluid that has ascended inside the container body 10 and reached near the height position of the upper end of the inclined portion 11 in the upper portion of the container body 10 flows into the discharge path of the first fluid discharge unit 40 from the inlet of the first fluid discharge unit 40 located at that height position, and is directly guided to the outside of the container body 10 and discharged from the container body 10. The first fluid that has been discharged to the outside of the container body 10 by the first fluid discharge unit 40 is sent to another heat exchange apparatus in a rear stage to be used for further heat exchange, or sent to a reinjection well of the geothermal area to be returned to the ground.

As in the above first embodiment, setting the supply position of the first fluid supply unit 20 to the position above the discharge position of the second fluid discharge unit 50 as well as setting the discharge position of the first fluid discharge unit 40 to the position below the supply position of the second fluid supply unit 30 enables the first fluid to stay within the height range where the inclined portion 11 exists in the container body 10, thus preventing the first fluid from existing in the vicinity of the container body 10 other than the inclined portion 11. At the same time, the layer of the second fluid is interposed between the first fluid and the inner surface of the container body in the inclined portion 11 to prevent the first fluid from having contact with the container body 10, thus eliminating or reducing adverse effects such as corrosion of the container body 10 due to the first fluid, and enabling reliable protection of the container body 10.

As in the above first embodiment, the second fluid that has been discharged to the outside of the container body 10 with the second fluid discharge unit 50 is sent to the evaporator 71 of the steam power cycle unit 70 by the pump 51 of the second fluid discharge unit 50, and in the process of flowing to the evaporator 71, that second fluid has its electrical conductivity measured by the measurement unit 55, and the mixing degree of the first fluid in that second fluid is acquired from the measured electrical conductivity.

In the evaporator 71 of the steam power cycle unit 70, the second fluid exchanges heat with the working fluid to increase the temperature of the working fluid and evaporate the working fluid.

In the steam power cycle unit 70, the liquid-phase working fluid that has exchanged heat with the second fluid in the evaporator 71 evaporates and changes to the gas phase with the rise of temperature, and this gas-phase working fluid flows out of the evaporator 71 and reaches the expander 72, as in the above first embodiment. The gas-phase working fluid activates the expander 72. The motive power generated by the expander 72 drives the generator 80 to generate the electric power. The gas-phase working fluid that has activated the expander 72 and decreased in pressure and temperature flows out of the expander 72 and is subsequently introduced into the condenser 73, and is condensed by heat exchange with the low-temperature fluid in the condenser 73 to be in a liquid phase again. This liquid-phase working fluid returns to the evaporator 71 via the pump 74, and repeats the respective processes after evaporation in the evaporator 71 in the same manner as described above.

On the other hand, the second fluid after completed heat exchange with the working fluid in the evaporator 71 flows from the evaporator 71 to the second fluid supply unit 30, and is supplied into the container body 10 to be subjected to heat exchange with the first fluid again. Thus, the second fluid circulates through a series of flow paths including the container body 10 and the evaporator 71, and repeats the heat exchange with the first fluid in the heat exchange apparatus 1 and the heat exchange with the working fluid in the evaporator 71, as in the above first embodiment.

As described above, the heat exchange apparatus according to this embodiment imparts, in supplying the second fluid by the second fluid supply unit 30 to the inclined portion 11 having the substantially conical surface shape in the container body 10, the velocity component in the tangential direction of the circumference in the circular cross-sectional shape of the inclined portion 11, to the flow of the second fluid, enabling the second fluid to helically flow down the inclined portion 11, and the centrifugal force accompanying the helical flow to be applied to the second fluid. This can further increase adhesion of the second fluid flow to the inner surface of the container body 10, and make the layer of the second fluid more difficult to peel off from the inner surface of the container body 10 against the inward first fluid flow, thus enabling the inner surface of the container body 10 to be reliably isolated and protected from the first fluid.

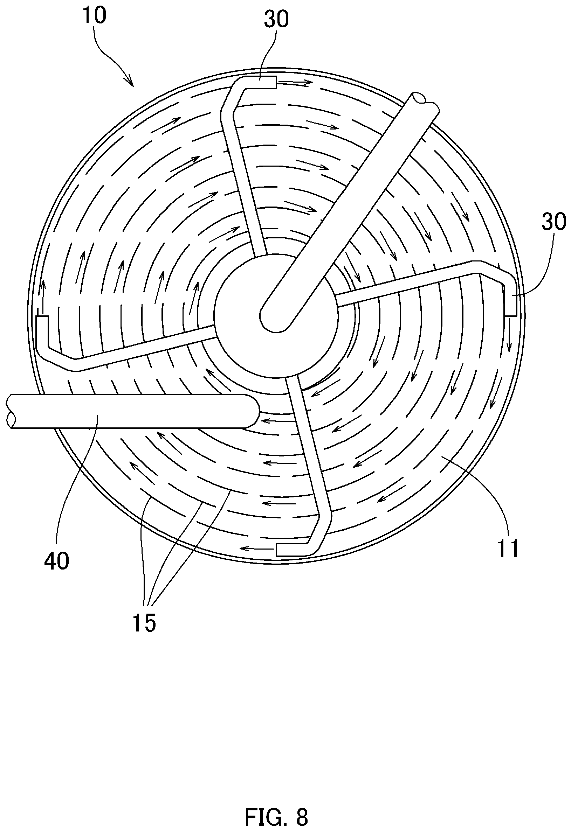

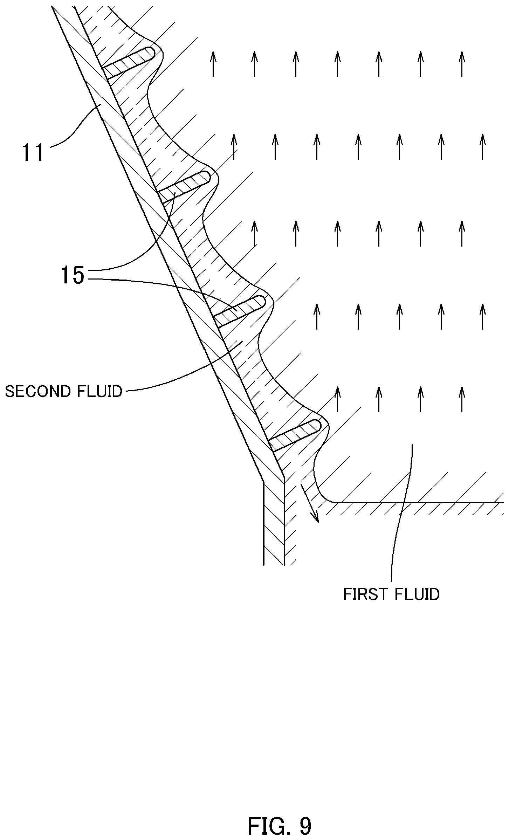

In the heat exchange apparatus according to the above example of this embodiment, the inclined portion 11 of the container body 10 is configured to have the inner surface formed of a curved surface having the conical surface shape which is smoothly continuous. The configuration is not limited to such a surface. Ridge-shaped guide portions 15 that guide the helical flow of the second fluid may be provided on the inclined portion 11 of the container body 10, as shown in FIGS. 8 and 9.

In this case, guiding the second fluid by the guide portions 15 to facilitate the helical flow of the second fluid causes the helical flow to be maintained in a wide range of the inclined portion 11, and easily adhering of the second fluid to the inner surface of the container body 10 by the centrifugal force of the helical flow to extend to the lower portion of the inclined portion 11, making it possible to still hardly peel off the second fluid layer from the inner surface, thus enabling the inner surface of the container body 10 to be reliably protected against the first fluid.

The guide portion 15 guides the flow of the second fluid and, on the other hand, is covered with a part of the second fluid that crosses its surface and flows downward (see FIG. 9), thus maintaining a state of not being in direct contact with the first fluid. However, when a protrusion amount of the ridge-shaped portion forming the guide portion 15 is large, for example, the second fluid may hardly reach a tip of the guide portion 15 and this tip may not be covered with the second fluid. In such a case, a predetermined range of the guide portion 15 including the tip may be subjected to a surface treatment such as coating for preventing a change such as corrosion if it has contact with the first fluid.

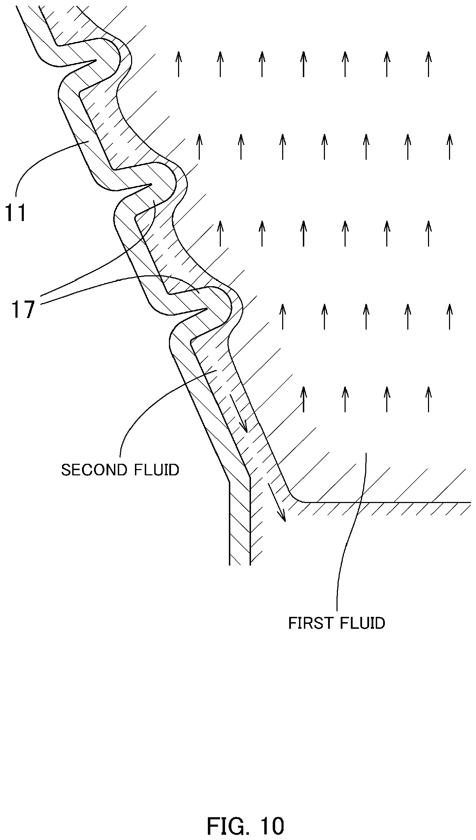

Additionally, instead of providing the ridge-shaped guide portion 15 on the inclined portion 11, step portions 17 capable of helically guiding the flow of the second fluid may be integrally formed as a part of the inclined portion 11 in forming the inclined portion 11, as shown in FIG. 10, enabling the inclined portion 11 itself to helically guide the flow of the second fluid, in the same manner as the case of the guide portion 15 being provided.

Further, the heat exchange apparatuses according to the above examples of the first and second embodiments are configured such that the second fluid supplied into the container body 10 maintains a state in which the layer of the second fluid exists between the inner surface of the container body 10 and the first fluid, at least in the entire region of the inclined portion 11 of the container body 10. The present invention is not limited to this configuration. For example, if, during the existence of the first fluid inside the container body 10, the second fluid flowing down along the inner surface of the container body 10 significantly reduces the opportunity for contact of the first fluid with the inner surface of the container body 10 and eliminates or reduces the deterioration of the container body 10 due to the contact of the first fluid with the inner surface of the container body 10, such a configuration may be possible that the second fluid does not necessarily maintain a state of its continuously flowing down so as to constantly cover the inner surface of the container body 10 in the inclined portion 11, for example, that the second fluid decreases in flow rate or flows down intermittently to such an extent that a situation in which the layer of the second fluid temporarily becomes discontinuous and the first fluid is in contact with the inner surface of the container body 10 for a short time occurs slightly in some positions of the inclined portion 11.

Furthermore, the heat exchange apparatuses according to the above examples of the first and second embodiments use liquid as both first and second fluids flowing into and out of the container body 10 and perform heat exchange by making direct contact between these liquids in the container body 10. The present invention is not limited to this configuration. For example, the first fluid and the second fluid may each be other than liquid, or may each be a mixed-phase fluid consisting of a liquid and a non-liquid.

For example, the first fluid, which is the high-temperature heat source fluid, can be a geothermal fluid (high-temperature and high-pressure steam) taken out from the ground (production well) and supplied directly without passing through the gas-liquid separator. In this case, the first fluid is condensed inside the container body 10 to be a liquid partially or entirely when the first fluid, which is a gas, is introduced into the container body 10 to exchange heat with the second fluid, which is a heat medium having a lower temperature.

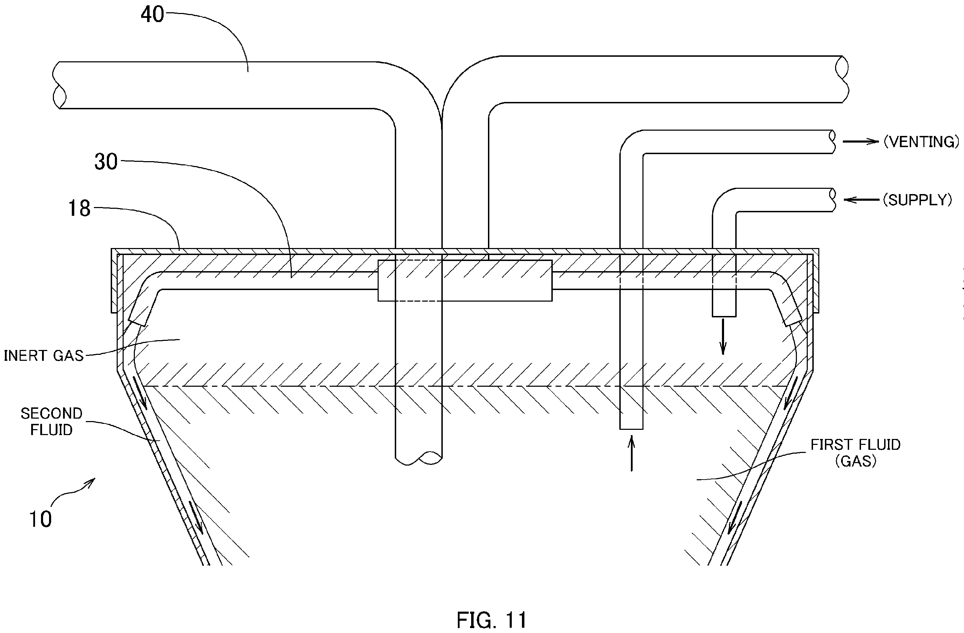

When the first fluid is thus introduced into the container body 10 as the gas, the container body 10 may be provided with a lid 18 to seal the inside of the container body, preventing the first fluid, which is the gas, from unintentionally flowing out of the container body 10, as shown in FIG. 11.

For the container body 10 that is thus made to be a sealed container in combination with the lid 18, the first fluid contains, if it is the geothermal fluid, gas-phase components having corrosion properties to metals as well as properties of scales being easily precipitated, and non-condensable corrosive gases, and can reach positions not covered with the flow of the second fluid, such as the upper inner surface of the container body 10 and an inner surface of the lid 18, so that it is desirable to prevent the first fluid from being in contact with such positions. Specifically, introducing an inert gas lighter than the first fluid that is a gas, for example, nitrogen gas, into the container body 10 and interposing it between the first fluid and the upper inner surface of the container body 10 and between the first fluid and the inner surface of the lid 18, as shown in FIG. 11, can prevent the first fluid as a gas from being in contact with the container body 10 and the lid 18.

### Reference Signs List

- 1: Heat exchange apparatus
- 10: Container body
- 11: Inclined portion
- 15: Guide portion
- 17: Step portion
- 18: Lid
- 20: First fluid supply unit
- 30: Second fluid supply unit
- 35: Supply means
- 40: First fluid discharge unit
- 50: Second fluid discharge unit
- 51: Pump
- 55: Measurement unit
- 60: Settling tank
- 70: Steam power cycle unit
- 71: Evaporator
- 72: Expander
- 73: Condenser
- 74: Pump
- 80: Generator
- 90: Gas-liquid separator
- 100: geothermal power generation system

## Claims

1. A fluid container comprising:
a container body (10) that is configured to contain a fluid in a space portion inside the container body (10) and to allow both of a first fluid having a corrosive property to a metal and/or a property of a scale being easily precipitated and a second fluid having a higher specific gravity than and being insoluble in the first fluid to flow into and out of the container body (10);
a first fluid supply unit (20) that is configured to supply the first fluid into the container body (10) from outside the container body (10);
a second fluid supply unit (30) that is configured to supply the second fluid into the container body (10) with the second fluid following an inner surface of the container body (10), at a predetermined height position located above a supply position of the first fluid in the container body (10);
a first fluid discharge unit (40) that is configured to discharge the first fluid to outside the container body (10) from a position located above the supply position of the first fluid in the container body (10) and below the supply position of the second fluid; and
a second fluid discharge unit (50) that is configured to discharge the second fluid to outside the container body (10) from a predetermined portion located below the supply position of the first fluid in the container body (10), wherein:
the inner surface of the container body (10) at least in a height range in which the first fluid is allowed to exist inside the container body (10) is formed to be inclined so as to be expanded open upward to form an inclined portion (11); and
the second fluid is supplied by the second fluid supply unit (30) over the entire circumference of the inner surface of the container body (10) to surround the space portion inside the container body (10), flows down while forming a layer of fluid at least along the inner surface of the inclined portion (11), and reaches a discharge position of the second fluid in the container body (10).

2. The fluid container according to claim 1, wherein:
the container body (10) has the inclined portion (11) of the inner surface formed in a substantially conical surface shape; and
the second fluid supply unit (30) is further configured to supply the second fluid in a supply direction having a velocity component in a tangential direction of a circumference of a cross section of the inclined portion (11) of the container body (10), such that the second fluid helically flows down on the inner surface of the inclined portion (11) to form a layer of fluid along the inner surface.

3. The fluid container according to claim 2, wherein:
the container body (10) is further configured to include a ridge-shaped guide portion (15) that guides a helical flow of the second fluid, disposed on the inclined portion (11) of the inner surface.

4. The fluid container according to any one of claims 1 to 3, wherein:
electrical conductivity of the second fluid in a predetermined stage after discharged from the container body (10) by the second fluid discharge unit (50) is measured, allowing a mixing degree of the first fluid in the second fluid to be acquired from the measured electrical conductivity.

5. A heat exchange apparatus (1) including the fluid container according to any one of claims 1 to 4, wherein:
a high-temperature heat source fluid is used as the first fluid, a liquid-phase heat medium subjected to heat exchange with the heat source fluid is used as the second fluid, and the heat exchange is performed by making direct contact between the first fluid and the second fluid in the container body (10); and
the second fluid supply unit (30) is further configured to reintroduce the second fluid that has been discharged from the container body (10) by the second fluid discharge unit (50) to reach outside of the container body (10) and has exchanged heat with another medium for heat exchange, and to supply the reintroduced second fluid into the container body (10), allowing for cyclic usage of the second fluid.

6. The heat exchange apparatus (1) according to claim 5, further comprising:
supply means (35) that is configured to supply the second fluid to a region inside the container body (10) in which the first fluid exists, separately from an amount of supply by the second fluid supply unit (30), wherein:
the supply means (35) is further configured to spray the second fluid into the first fluid, causing droplets of the second fluid to settle out in the first fluid, and then the droplets of the second fluid that have passed through the region in which the first fluid exists to merge into the second fluid supplied from the second fluid supply unit (30).

7. The heat exchange apparatus (1) according to claim 5 or 6, further comprising:
a settling tank (60) that is configured to allow the first fluid that has been taken out from inside the container body (10) to outside the container body (10) by the first fluid discharge unit (40) to be introduced into the settling tank (60), wherein:
the settling tank (60) is further configured to retain a predetermined amount of the first fluid, causing the second fluid that has been mixed into the first fluid in the container body (10) to settle out and thus to be separable from the first fluid.
